# EUROPEAN PATENT SPECIFICATION

(11) **EP 2 310 239 B1**
(45) Date of publication and mention of the grant of the patent: **08.08.2018**
(21) Application number: 09769646.2
(22) Date of filing: 25.06.2009
(51) Int. Cl.: B60T 13/125

(54) **BRAKE ASSEMBLY FOR A VEHICLE**
BREMSANORDNUNG FÜR EIN FAHRZEUG
ENSEMBLE FREIN DESTINÉ À UN VÉHICULE

(30) Priority: 27.06.2008 DE 102008030511
(43) Date of publication of application: 20.04.2011
(73) Proprietor: AGCO GmbH, 87616 Marktoberdorf (DE)
(72) Inventor: ZEILER, Hans-Peter, 87616 Marktoberdorf (DE)
(74) Representative: Morrall, Roger
(86) International application number: PCT/IB2009/006049
(87) International publication number: WO 2009/156833

(56) References cited:
- EP-A1- 1 253 055
- DE-A1- 3 735 315
- US-A- 5 281 007

## Description

The invention relates to a brake assembly for a vehicle, in particular utility vehicle, such as a tractor for example.

Braking systems in vehicles usually comprise a service brake and a parking brake. Service brakes in some vehicles comprise a redundant dual circuit brake so that in case of failure of one brake circuit, a second brake circuit can still function. If a service brake does not comprise a redundant dual circuit brake system, as is the case with some agricultural utility vehicles, the parking brake must be able to function as a service brake and therefore must be able to brake the vehicle smoothly (as with a service brake). The parking brake device can be designed for example as an emergency brake which is operable from the vehicle cab by, for example an electrically operable push button device however, this does not allow the vehicle to be braked smoothly in case of service brake failure.

Owing to the heavy weight of agricultural utility vehicles and the loads pulled, the service brakes and parking brakes used in agricultural utility vehicles must meet high performance requirements in operation. The parking brake is designed in such a manner that, in a first position, it applies a braking action on the wheels.

Therefore the parking brake operating device, located in the first position, must initially be operated manually by a driver before the utility vehicle is started. As the result of this action the parking brake operating device is moved into a second position wherein no braking action of the parking brake on the wheels takes place. When turning off an engine of the utility vehicle, the parking brake operating device must be moved again into the first position, in order to apply a braking action of the parking brake on the wheels. In this case it may happen that the driver forgets to operate the parking brake operating device on leaving the vehicle. In particular when parking the utility vehicle on ground with a steep incline this can lead to a heavy load on a utility vehicle transmission. In such a case the utility vehicle is thus prevented from moving only by the utility vehicle transmission.

The object of the present invention is to provide a brake assembly, which takes the onus of operating the parking brake off the driver and additionally reduces the load on the utility vehicle transmission.

A further object of the invention is to provide a parking brake assembly which can serve as a secondary brake so that the vehicle can be decelerated in a controlled way by the driver, in the event of failure of the service brake.

United States patent 5,281,007 describes a brake assembly comprising a pressure reservoir, a brake actuator, a discharge unit and a brake element, wherein a first valve unit is hydraulically connected to the pressure reservoir and brake actuator, and wherein the discharge unit is arranged between the pressure reservoir and the brake actuator, said first valve unit being movable into several positions by a control unit, wherein the brake actuator is hydraulically connected to the pressure reservoir and to the discharge unit, and a second valve unit is hydraulically arranged between the pressure reservoir and the brake actuator and coupled to a manual operating unit.

According to the present invention there is provided a brake assembly as recited in claim 1 below.

The advantages obtained with the invention lie particularly in that, as the result of operating a valve unit by a control unit, automatic application or release of the parking brake is possible. The parking brake can be automatically operated for example when the driver leaves the utility vehicle or when he turns off an engine of the utility vehicle. Thus it is ensured that when parking the utility vehicle a braking action is always applied by the parking brake. Therefore parking the utility vehicle on ground with a steep incline also does not lead to any significant load on the utility vehicle transmission.

Additionally dependent on the driving state of the utility vehicle a change between parking brake operation and service brake operation can also be automatically made by the brake assembly. Furthermore starting on a hill is facilitated by automatic application or release of the parking brake.

A further advantage of the invention is that the parking brake operating device is mechanically, or hydraulically connected to the parking brake. Thus, for example, in case of service brake failure the parking brake can be applied as an alternative to the service brake and smooth braking action on the wheels can be achieved. In an emergency situation the parking brake can be applied in addition to the service brake so that additional braking action on the wheels can be achieved. A further advantage is that if the control unit fails, the parking brake can still be operated manually by the driver.

Preferably, the first valve unit is a solenoid valve with two solenoid coils.

More preferably, each of the solenoid coils are connected to a control unit.

Preferably, the control unit is connected to a brake actuator.

More preferably, a brake release unit is arranged inside the control unit.

Preferably, the brake assembly further comprises a piston, a spring element and a piston chamber wherein the piston is arranged inside the piston chamber and the spring element is in contact with the piston.

The invention will now be described, by example only with reference to the following drawing, in which:

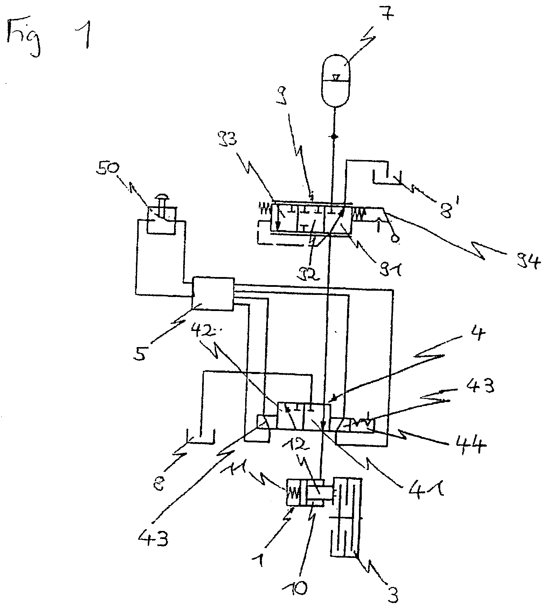

- Fig. 1:: is a brake assembly according to the invention with an electrically operated valve unit and a manually operated valve unit.

Fig. 1 shows a brake assembly with an electrically operated first valve unit 4 and manually operated second valve unit 9 in a released state of the parking brake.

In the first position 41 of the first valve unit 4, a pressure reservoir 7 is fluidly connected to a brake actuator via the first valve unit 4. In a second position 42 of the first valve unit 4, the brake actuator 1 is fluidly connected to a discharge opening unit 8. The discharge opening unit concerns a tank 8 for example. The first valve unit 4 is switched into the first and second position 41, 42 by a control unit 5.

The second valve unit 9 is arranged between the pressure reservoir 7 and the first valve unit 4 and is fluidly connected to these in each case. Furthermore the valve unit 9 is fluidly connected to a further discharge unit 8'. The discharge unit 8' can be formed, for example as a tank 8'. Additionally, the second valve unit 9 is coupled with a manual operating unit 94, which is placed, for example in a cab of the utility vehicle. This parking brake operating device for example is designed as a parking brake lever 94. The second valve unit 9 can be switched between three different positions 91, 92, 93 by means of parking brake lever 94.

The first valve unit 4 is designed as a solenoid valve for example. The solenoid valve has a slide gale and solenoid coils 43 for controlling a position of the slide gate. The solenoid valve is switched by the position of the slide gate into the respective position 41, 42. Moreover the valve unit 4 is provided with a snap-in locking device 44, so that the slide gate positions 41 or 42 are maintained for example if power is suddenly interrupted.

The solenoid coils 43 are connected to the control unit 5 in each case, as a result of which the solenoid coils are powered, in order to adjust the position of the slide gate. The position of the slide gate is detected by a sensor and, dependent on this, the respective solenoid coil is powered. Furthermore, the slide gate is designed in such a manner that its position is not changed by only on or off switching of the control unit 5.

The brake actuator I comprises a piston chamber 10, inside which a piston 12 is arranged. The piston 12 is formed in such a manner that it divides the piston chamber 10 into two partial chambers with one end. A spring element 11, which is in contact with the piston 12 is arranged in one of these partial chambers formed inside the piston chamber 10. The partial chamber, not comprising the spring element 11, is hydraulically connected to the first valve unit 4. The end of the piston 12, turned away from the spring element 11, is in contact with a brake element 3. In this way the brake actuator 1 and the brake element 3 together form a parking brake.

The brake element 3 consists of a plurality of brake discs for example. The brake discs are formed in such a manner that a first part of the brake discs is axially displaceable and a second part of the brake discs is firmly connected to a brake housing, not illustrated in Fig. 1. The piston 12 is in contact with the axially displaceable first part of the brake discs.

Furthermore the control unit 5 is connected to a brake actuator 50. The brake actuator 50 could be, a push button placed inside a vehicle cab of the utility vehicle. At the same time the respective position 41, 42 of the first valve unit 4 is adjusted dependent on a position of the brake actuator 50. Additionally a recognition device is arranged on the control unit 5, which recognizes the respective position of the brake actuator 50.

The control unit 5 also comprises a brake release unit, not illustrated in Fig. 1. In this brake release unit a prevailing driving state of the utility vehicle is compared with a recorded driving state. Dependent on the prevailing driving state of the utility vehicle, as a result of the brake release unit, powering of the solenoid coils 43 is triggered by the control unit 5. Thus, dependent on the driving state of the utility vehicle, the valve unit 4 switches into one of the two positions 41, 42.

If, as shown in Fig. 1, the brake actuator 50 is in a first position 41, no braking action is applied on the wheels by the parking brake. In a second position of the brake actuator 50 the control unit 5 causes the first valve unit 4 to switch into the second position 42. For example the first position of the brake actuator 50 corresponds to an inactivated press button, wherein no electrical connection with the control unit 5 exists. The second position of the brake actuator 50 then corresponds to an activated press button, wherein an electrical connection with the control unit 5 exists.

The switching processes of the brake assembly when turning off and starting the engine of a utility vehicle are described below.

When turning off the engine of the utility vehicle it must be ensured that the parking brake applies a braking action on the wheels. In order to ensure this, it is possible for the driver to operate the push button, which corresponds to the brake actuator 50. As result of operating the push button, in the second position the control unit 5 is activated to cause the first valve unit 4 to switch. For this purpose the solenoid coils 43 of the valve unit 4 are powered. The control unit 5 therefore recognizes the respective position of the push button by means of the recognition device arranged on the control unit 5. As a result of the powering of the solenoid coils 43, the position of the slide gate is shifted. The slide gate is displaced in such a manner that the first valve unit 4 switches into the second position 42.

In the second position 42 of the first valve unit 4 the piston chamber 10 of the brake actuator I is hydraulically connected to the tank 8 by the first valve unit 4. Since the pressure prevailing in the tank 8 is less than the pressure prevailing in the piston chamber 10, the fluid flows out of the piston chamber 10 into the tank 8. Due to the escape of the fluid the force exerted on the piston 12 by the fluid is reduced. Thus the piston 12, due to the spring action affecting the piston 12, is displaced towards the brake element 3. Therefore a braking action on the vehicle wheels - not illustrated in Fig. 1 - is ensured by the displacement of the piston 12.

A further possibility for ensuring the braking action of the parking brake on the wheels is that the control unit 5 automatically switches the first valve unit 4. For this purpose the magnetic coils 43 are powered in this case. This powering of the solenoid coils 43 can be triggered alternatively or additionally to the operation of the brake actuator 50. The powering of the solenoid coils 43 by the control unit 5 is triggered through the brake release unit. The brake release unit only causes the solenoid coils 43 to be powered, whenever a certain driving state of the utility vehicle is present. In addition certain parameters, which characterize the driving state of the utility vehicle, are measured by sensors, not illustrated in Fig. 1. These measured parameters are sent to the control unit 5, where the driving state of the utility vehicle is then determined.

Thus for example the solenoid coils 43 are automatically powered if it is detected that an engine of the utility vehicle is turned off. Additionally it can be determined, by means of the sensors, whether a driver has left the utility vehicle, so that powering of the solenoid coils 43 takes place in this case.

When starting the utility vehicle, the parking brake must be released beforehand. A possibility for this is that the driver operates the brake actuator 50. The first position of the brake actuator 50 then resulting is recognized by the recognition device of the control unit 5. Therefore the control unit 5 in a next step will switch the first valve unit 4 into the first position 41. This takes place by powering of the solenoid coils 43 in this case.

In this first position 41 of the valve unit 4, the pressure reservoir 7 is hydraulically connected to the brake actuator I by the first valve unit 4. The fluid flows from the pressure reservoir 7 into the piston chamber 10 of the brake actuator I and exerts a force on the piston 12 directed against the spring element 11. Therefore the piston 12 is displaced towards the spring element 11. Due to the coupling of the piston 12 with part of the brake discs of the brake element 3 these are shifted in the same direction as the piston 12. The piston 12 is displaced in such a manner that no brake action by the parking brake is applied on the wheels.

A further possibility for releasing the parking brake is that the brake release unit of the control unit 5 causes the first valve unit 4 to switch. For this purpose the solenoid coils 43 are powered in this case. This takes place dependent on the driving state of the utility vehicle.

Further embodiments are also conceivable, wherein a change between parking brake operation and service brake operation is possible while the utility vehicle is operating. If, for example, when starting on a hill using the brake release unit, rolling back of the utility vehicle is detected, the parking brake is applied automatically. This action takes place in the way described above. Moreover the brake release unit immediately causes the parking brake to release whenever a certain driving state of the utility vehicle is present. For example the measured rpm must be greater than a given value.

If the first valve unit 4 is located in the first position 41, the pressure in the piston chamber 10 can be adjusted, dependent on the three different positions 91, 92, 93 of the second valve unit. Thus the brake torque on the parking brake can be adjusted as desired by the driver. Therefore, if the parking brake serves as secondary brake, the vehicle can be decelerated in a controlled way by the driver, in the event of failure of the service brake.

In this case with a first position 91 of the second valve unit 9 the brake operating device I is hydraulically connected to the tank 8, as a result of which the pressure in the piston chamber 10 is reduced. With a second position 92 of the second valve unit 9 no fluid connection between the brake operating device I and the tank 8 and/or the pressure reservoir 7 takes place, whereby the pressure in the piston chamber 10 is maintained. With the third position 93 of the second valve unit 9 the brake operating device I is hydraulically connected directly to the pressure reservoir 9 as a result of which the pressure in piston chamber 10 is increased.

In the case illustrated by Fig. 1 the second valve unit 9 is switched into the first state 91 through the parking brake lever 94. Since the first valve unit 4 in this case is switched in the first position 41, a fluid connection exists between the brake operating device 1 and the second valve unit 9, therefore the fluid in the piston chamber 10 of the brake operating device 30 can flow via the first and second valve unit 4, 9 into the tank 8'. Thus, providing the first valve unit 4 is located in the first position 41, by means of the second valve unit 9 controlled operation of the parking brake can take place manually. In this respect the parking brake can be applied and controlled by parking brake lever 94 and the vehicle can be decelerated smoothly in cases where, for example there is failure of the service brake.

## Claims

1. Brake assembly comprising a pressure reservoir (7), a brake actuator (1), a discharge unit (8) and a brake element (3), wherein a first valve unit (4) is hydraulically connected to the pressure reservoir (7) and/or the brake actuator (1), and/or wherein the discharge unit (8) is arranged between the pressure reservoir (7) and the brake actuator (1), said first valve unit (4) being movable into at least one position (41, 42) by a control unit (5), wherein the brake actuator (1), in use of the brake assembly, is hydraulically connectable to the pressure reservoir (7) and, optionally, to the discharge unit (8), and, a second valve unit (9) is hydraulically arranged between the pressure reservoir (7) and the brake actuator (1)and coupled to a manual operating unit (94), **characterised in that** the first valve unit (4) has a snap-in locking device (44).

2. Brake assembly according to claim 1, wherein the first valve unit (4) is designed as a solenoid valve with two solenoid coils (43).

3. Brake assembly according to claim 2, wherein the solenoid coils (43) can be connected to a control unit (5) in each case.

4. Brake assembly according to anyone of the above claims, wherein the first valve unit (4) has a piston chamber (10), a piston (12) arranged inside the piston chamber, and a spring element (11), the spring element (11) being in contact with the piston (12).

5. Brake assembly according to anyone of the above claims, wherein the control unit (5) can be connected to a brake actuator (50).

6. Brake assembly according to anyone of the above claims, wherein a brake release unit is arranged inside the control unit (5).

7. Utility vehicle with a brake assembly according to anyone of claims 1 to 6.

## Patentansprüche

1. Bremsanordnung mit einem Druckvorratsbehälter (7), einem Bremszylinder (1), einer Entladungseinheit (8) und einem Bremselement (3), wobei eine erste Ventileinheit (4) hydraulisch mit dem Druckvorratsbehälter (7) und/oder dem Bremszylinder (1) verbunden ist, und/oder wobei die Entladungseinheit (8) zwischen dem Druckvorratsbehälter (7) und dem Bremszylinder (1) angeordnet ist, wobei die erste Ventileinheit (4) durch eine Steuer-/Regeleinheit (5) in mindestens eine Position (41, 42) bewegbar ist, wobei der Bremszylinder (1) bei Verwendung der Bremsanordnung hydraulisch mit dem Vorratsbehälter (7) und optional mit der Entladungseinheit (8) verbindbar ist, und wobei eine zweite Ventileinheit (9) hydraulisch zwischen dem Druckvorratsbehälter (7) und dem Bremszylinder (1) angeordnet und mit einer manuellen Bedieneinheit (94) verbunden ist, **dadurch gekennzeichnet, dass** die erste Ventileinheit (4) eine einrastende Verriegelungsvorrichtung (44) aufweist.

2. Bremsanordnung nach Anspruch 1, wobei die erste Ventileinheit (4) als ein Magnetventil mit zwei Magnetspulen (43) ausgebildet ist.

3. Bremsanordnung nach Anspruch 2, wobei die Magnetspulen (43) in jedem Fall mit einer Steuer-/Regeleinheit (5) verbunden sein können.

4. Bremsanordnung nach einem der vorhergehenden Ansprüche, wobei die erste Ventileinheit (4) eine Kolbenkammer (10), einen in der Kolbenkammer angeordneten Kolben (12) und ein Federelement (11) aufweist, wobei das Federelement (11) mit dem Kolben (12) in Kontakt steht.

5. Bremsanordnung nach einem der vorhergehenden Ansprüche, wobei die Steuer-/Regeleinheit (5) mit einem Bremszylinder (50) verbunden sein kann.

6. Bremsanordnung nach einem der vorhergehenden Ansprüche, wobei eine Bremslöseeinheit in der Steuer-/Regeleinheit (5) angeordnet ist.

7. Nutzfahrzeug mit einer Bremsanordnung nach einem der Ansprüche 1 bis 6.

## Revendications

1. Ensemble de frein comprenant un réservoir sous pression (7), un actionneur de frein (1), une unité de déchargement (8) et un élément de frein (3), dans lequel une première unité formant vanne (4) est raccordée hydrauliquement au réservoir sous pression (7) et/ou à l'actionneur de frein (1), et/ou dans lequel l'unité de déchargement (8) est agencée entre le réservoir sous pression (7) et l'actionneur de frein (1), ladite première unité formant vanne (4) pouvant être déplacée dans au moins une position (41, 42) par une unité de commande (5), dans lequel l'actionneur de frein (1), au cours l'utilisation de l'ensemble de frein, peut être raccordé hydrauliquement aux réservoir sous pression (7) et, en variante, à l'unité de déchargement (8), et
une seconde unité formant vanne (9) est agencée hydrauliquement entre le réservoir sous pression (7) et l'actionneur de frein (1) et couplée à une unité de commande manuelle (94), **caractérisé en ce que** la première unité formant vanne (4) comporte un dispositif de verrouillage à encliquetage (44).

2. Ensemble de frein selon la revendication 1, dans lequel la première unité formant vanne (4) est conçue comme une électrovanne avec deux solénoïdes (43).

3. Ensemble de frein selon la revendication 2, dans lequel les solénoïdes (43) peuvent, dans chaque cas, être raccordés à une unité de commande (5).

4. Ensemble de frein selon l'une quelconque des revendications précédentes, dans lequel la première unité formant vanne (4) comporte une chambre de piston (10), un piston (12) agencé à l'intérieur de la chambre de piston et un élément formant ressort (11), l'élément formant ressort (11) étant en contact avec le piston (12).

5. Ensemble de frein selon l'une quelconque des revendications précédentes, dans lequel l'unité de commande (5) peut être raccordée à un actionneur de frein (50).

6. Ensemble de frein selon l'une quelconque des revendications précédentes, dans lequel une unité de libération de frein est agencée à l'intérieur de l'unité de commande (5).

7. Véhicule utilitaire comportant un ensemble de frein selon l'une quelconque des revendications 1 à 6.
